# EUROPEAN PATENT APPLICATION

(11) **EP 4 831 103 A1**
(43) Date of publication of application: **28.10.2026**
(21) Application number: 26163793.8
(22) Date of filing: 10.03.2026
(51) Int. Cl.: B66B 1/34, B66B 5/00, G06N 20/00, G06Q 10/20, G06Q 30/016

(54) **SYSTEM AND METHOD FOR PROVIDING AI ASSISTED UPDATES TO OPERATIONAL STATES OF A PEOPLE MOVER**

(30) Priority: 23.04.2025 IN 202511039105
(71) Applicant: Otis Elevator Company, Farmington, Connecticut 06032 (US)
(72) Inventor: Gamini, N V Rudramurthy, 500081 Hyderabad (IN); Miriyala, Pradeep, 500081 Hyderabad (IN)
(74) Representative: Schmitt-Nilson Schraud Waibel Wohlfrom Patentanwälte Partnerschaft mbB

(57) **Abstract**

A people mover system having a people mover; one or more controllers, executing an artificial intelligence module, configured to: operate the people mover in a first operational state according to operational parameters that are separately capable of being adjusted by a mechanic via a mobile device; and transmit, to the mobile device of the mechanic a prediction of a second operational state following receipt of input data from the mobile device of the mechanic of a first adjustment to the one or more of the operational parameters, wherein the input data is indicative of a target operational state of the people mover identified in the input data.

## Description

The embodiments relate to a distributed people mover system and more specifically to a system and method for providing AI assisted updates to operational states of a people mover.

A mechanic at a site of a people mover operating in a first operational state may seek to perform different kinds of updates to operational parameters of the people mover so that the people mover operates in a target operational state. This may be time consuming, because changing the parameters may result in a second operational state that differs from the target operational state by an unacceptable amount.

Disclosed is a people mover system including a people mover; one or more controllers, executing an artificial intelligence module, configured to: operate the people mover in a first operational state according to operational parameters that are separately capable of being adjusted by a mechanic via a mobile device; and transmit, to the mobile device of the mechanic a prediction of a second operational state following receipt of input data from the mobile device of the mechanic of a first adjustment to the one or more of the operational parameters, wherein the input data is indicative of a target operational state of the people mover identified in the input data.

Particular embodiments further may include at least one, or a plurality of, the following optional features, alone or in combination with each other:
In addition to one or more aspects of the people mover system or as an alternate, the one or more controllers is configured to: determine that the target operational state resolves a customer complaint; and transmit a go, no-go, or warning response to the mobile device of the mechanic depending on whether the second operational state matches the target operational state, fails to match the target operational state and results in the system operating outside of acceptable parameters, or fails to match the target operational state and results in the system operating within acceptable parameters.

In addition to one or more aspects of the people mover system or as an alternate, the one or more controllers configured to issue a warning when the second operational state and the target operational state differ from each other by more than a first threshold.

In addition to one or more aspects of the people mover system or as an alternate, the one or more controllers is configured to implement the first adjustment to the one or more of the operational parameters when the second operational state and the target operational state differ from each other by less than the first threshold.

In addition to one or more aspects of the people mover system or as an alternate, the one or more controllers is configured to identify a third operational state, pursuant to a second adjustment to the one or more of the operational parameters; and the third operational state and the target operational state are predicted to differ from each other by less than the first threshold.

In addition to one or more aspects of the people mover system or as an alternate, the one or more controllers configured to implement the third operational state upon receiving input by the mechanic indicative of accepting the third operational state.

Disclosed is a method of controlling a people mover system including operating, by one or more controller executing an artificial intelligence module, a people mover in a first operational state according to operational parameters that are separately capable of being adjusted by a mechanic via a mobile device; and receiving, by the one or more controllers, input data indicative of a first adjustment to one or more of the operational parameters to obtain a target operational state of the people mover; transmitting, by the one or more controllers to the mobile device of the mechanic, a determination of a second operational state upon processing the input data.'

Particular embodiments further may include at least one, or a plurality of, the following optional features, alone or in combination with each other:
In addition to one or more aspects of the method of controlling the people mover system or as an alternate, the method includes the one or more controllers determining that the target operational state resolves a customer complaint; and transmitting a go, no-go, or warning response to the mobile device of the mechanic depending on whether the second operational state matches the target operational state, fails to match the target operational state and results in the system operating outside of acceptable parameters, or fails to match the target operational state and results in the system operating within acceptable parameters.

In addition to one or more aspects of the method of controlling the people mover system or as an alternate, the method includes issuing, by the one or more controllers, a warning when the second operational state and the target operational state differ from each other by more than a first threshold.

In addition to one or more aspects of the method of controlling the people mover system or as an alternate, the method includes implementing, by the one or more controllers, the first adjustment to the one or more of the operational parameters when the second operational state and the target operational state differ from each other by less than the first threshold.

In addition to one or more aspects of the method of controlling the people mover system or as an alternate, the method includes identifying, by the one or more controllers, a third operational state, pursuant to a second adjustment to the one or more of the operational parameters; wherein the third operational state and the target operational state are predicted to differ from each other by less than the first threshold.

In addition to one or more aspects of the method of controlling the people mover system or as an alternate, the method includes implementing, by the one or more controllers, the third operational state upon receiving input by the mobile device of the mechanic indicative of accepting the third operational state.

In addition to one or more aspects of the method of controlling the people mover system or as an alternate, the method includes displaying by the mobile device utilized by the mechanic the people mover operating in the second operational state.

In addition to one or more aspects of the method of controlling the people mover system or as an alternate, the method includes displaying by the mobile device utilized by the mechanic from data received by the one or more controllers the people mover operating in the first operational state and the second operational state.

In addition to one or more aspects of the method of controlling the people mover system or as an alternate, the method includes illustrating by the mobile device on the display of the mobile device from the data received by the one or more controllers, a first parameter identified in first parameter data transmitted from the one or more controllers, wherein the first parameter has a relatively greater impact on the second operational state compared with the first operational state.

In addition to one or more aspects of the method of controlling the people mover system or as an alternate, the method includes illustrating, on the display of the mobile device from the data received by the one or more controllers, a comparison of operating characteristics of the people mover operating in the first operational state and the second operational state, received as comparison data from the one or more controllers, wherein the operating characteristics include one or more of door operation, energy consumption, and waiting time.

Further disclosed is a method of operating a people mover system, including operating, by one or more controllers executing an artificial intelligence module, a people mover in a first operational state according to operational parameters that are separately capable of being adjusted by a mechanic utilizing a mobile device having a display; predicting, by the one or more controllers, a second operational state upon receipt of input data from the mobile device of the mechanic indicative of a first adjustment to one or more of the operational parameters to obtain a target operational state of the people mover; transmitting, by the one or more controllers to the mobile device of the mechanic, a prediction of the second operational state to the mobile device; and illustrating, on the display of the mobile device from data received by the one or more controllers, the people mover operating in the second operational state after processing the input data.

Particular embodiments further may include at least one, or a plurality of, the following optional features, alone or in combination with each other:
In addition to one or more aspects of the of operating the people mover system, or as an alternate, the method includes illustrating, on the display of the mobile device from the data received by the one or more controllers, the people mover operating in the first operational state and the second operational state.

In addition to one or more aspects of the of operating the people mover system, or as an alternate, the method includes illustrating, on the display of the mobile device, a first parameter identified in first parameter data transmitted from the one or more controllers, wherein the first parameter has a relatively greater impact on the second operational state compared with the first operational state.

In addition to one or more aspects of the of operating the people mover system, or as an alternate, the method includes illustrating, on the display of the mobile device from the data received by the one or more controllers, a comparison of operating characteristics of the people mover operating in the first operational state and the second operational state, received as comparison data from the one or more controllers, wherein the operating characteristics include one or more of door operation, energy consumption, and waiting time.

The present disclosure is illustrated by way of example and not limited in the accompanying figures in which like reference numerals indicate similar elements.
FIG. 1 is a schematic illustration of an elevator system that may employ various embodiments of the present disclosure;
FIG. 2 shows a distributed system according to the embodiments that is configured to provide AI assistance to resolve technical issues for a mechanic performing maintenance on a people mover system;
FIG. 3 is a flowchart showing a method of managing a people mover according to an embodiment;
FIG. 4 is a flowchart showing a method of managing a people mover according to an embodiment;
FIG. 5 is a side-by-side visualization of a first operational state and a second operational state of an elevator car with parameter changes.

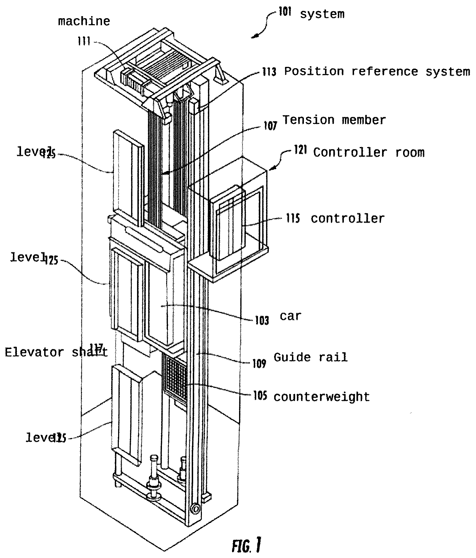

FIG. 1 is a perspective view of an elevator system 101 including an elevator car 103, a counterweight 105, a tension member 107, a guide rail (or rail system) 109, a machine (or machine system) 111, a position reference system 113, and an electronic elevator controller (controller) 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft (or hoistway) 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 may be located, as shown, in a controller room 121 of the elevator shaft 117 and is configured to control the operation of the elevator system 101, and particularly the elevator car 103. It is to be appreciated that the controller 115 need not be in the controller room 121 but may be in the hoistway or other location in the elevator system. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. Embodiments may also be employed in ropeless elevator systems using self-propelled elevator cars (e.g., elevator cars equipped with friction wheels, pinch wheels or traction wheels). FIG. 1 is merely a non-limiting example presented for illustrative and explanatory purposes.

In other embodiments, the system comprises a conveyance system that moves passengers between floors and/or along a single floor. Such conveyance systems may include escalators, people movers, etc. Accordingly, embodiments described herein are not limited to elevator systems, such as that shown in Figure 1. In one example, embodiments disclosed herein may be applicable conveyance systems such as an elevator system 101 and a conveyance apparatus of the conveyance system such as an elevator car 103 of the elevator system 101. In another example, embodiments disclosed herein may be applicable conveyance systems such as an escalator system and a conveyance apparatus of the conveyance system such as a moving stair of the escalator system and/or a moving walkway system.

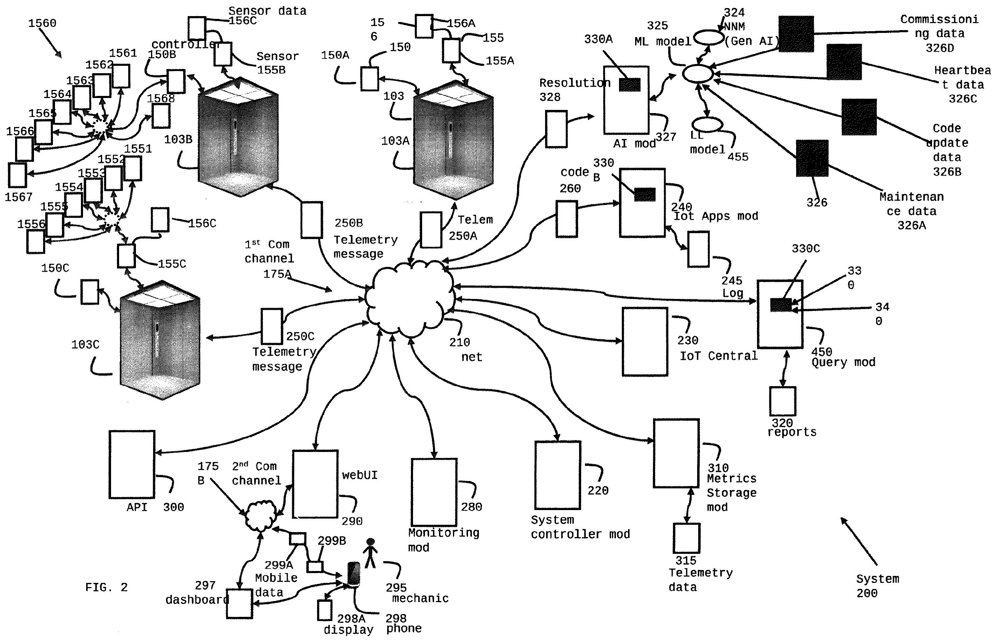

Turning to FIG. 2, disclosed is a distributed (e.g., cloud) system 200. While various modules are illustrated for performing discrete functions in FIG. 2, it is to be appreciated that two or more of the functions may be combined into a common module or alternatively the functions may be further divided into additional modules, executable on one or more controllers which may be generally referenced as processors.

The system 200 includes a network 210 which may be a wide area network such as the internet. Devices 103A-103C (generally 103, which may also be referred to as people movers), which may be elevator cars, escalators, moving walkways or the like, as nonlimiting embodiments, may be IoT (internet of things) devices, i.e., devices operationally coupled over the internet over a first communication channel 175A. The first communication channel 175 may utilize a wired channel, such as ethernet, or a wireless channel, e.g., a wide area network or a cellular network, discussed in greater detail below. Each of the devices 103 may have a device controller 150A-150C (generally controller 150) and a sensor 155A-155C (generally 155) configured to transmit sensor data 156A-156C (generally 156). The sensor 155 may include one or more of a speed sensor 1551, a vibration sensor 1552, a load sensor 1553, an accelerometer 1554, a door operation sensor 1555 and a health sensor 1556, e.g., that is configured to sense a mechanical failure of the device 103. The system may include additional sensors-the foregoing list should not be viewed as limiting. The controller 150 may control operational parameters 160 of the device 103, such as speed between end locations such as floors 1561, brake speed when approaching an end location 1562, acceleration from standstill when traveling away from an end location 1563, door opening speed 1564, door close speed 1565, door idle when open 1566, air conditioning conditions 1567, as non-limiting examples, which may further include a volume of an internal speaker or sensitivity of an internal microphone, etc.

The system 200 may have a controller module (or service) 220, an IoT central module 230 or similar platform, and an IoT application and data storage module 240 (for simplicity an application module or an IoT app module 240). The IoT central module 230 is a known IoT application platform as a service (aPaaS) with user-engageable dashboards that centralizes device data, allows for data-driven workflows, and the creation of custom apps.

IoT app module 240 is utilized for storage and other processes running in a cloud service. The message comes from the devices 103 (e.g., in a raw format or as processed data, as nonlimiting examples) and are extracted, transformed into a readable/storable format and loaded onto databases for the front end applications to consume and publish. The system controller module 220 instructs the IoT central module 230 to register the devices 103 with the IoT app module 240 to enable the IoT app module 240 to receive telemetry data 250A-250C (generally 250), which includes the sensor data 156, from the devices 103 and to transmit code 260, such as updates, to the devices 103. The devices 103 may also interact in other ways with each other and the cloud, e.g., to request updates, voice communications, etc. It is to be appreciated that the telemetry data 250 may include different types of data, such as logs, metrics, events, and traces. Logs capture detailed events or actions within a system, metrics track performance over time, events highlight significant occurrences, and traces map the flow of processes across different systems. Together, these pieces form a comprehensive picture of system health and performance. There may be hundreds of thousands of the devices 103, each sending production (e.g., actual) telemetry data 250 to the IoT app module 240, each message related to different aspects of the devices 103, such as the operational condition of the brakes, doors, etc., throughout the day.

The IoT app module 240 may generate logs 245, daily, indicative of received telemetry data 250 and transmitted code 260. A monitor and capture metrics module (for simplicity, a monitoring module) 280 may monitor the logs generated by the IoT app module 240. The logs 245 may be forwarded to a metrics storage module 310 where telemetry metrics data 315 is derived from the logs 245. A query module 450 may generate reports 320 from the telemetry metrics data 315, which may be viewable via an interactive performance dashboard 297, accessible via a web interface module 290, e.g., on a mobile device, i.e., a mobile phone 298 having a user engageable display 298A, as a nonlimiting embodiment. With this configuration, errors in the communications can be identified by a user 295 who may be a technician. The user may engage an API module (or gateway) 300 to engage the system controller module 220. The mobile phone 298 may communicate with, e.g., the system controller module 220, by transmitting outbound mobile device data 299A to the controller module 220, and receiving inbound mobile device data 299B from the controller module 220, over a second communication channel 175B which may be a cellular network or a wide area network.

More specifically, the figure shows the user 295 that engages the web interface module 290 to communicate with the system controller module 220 via the API module 300, and to view the performance dashboard 297, e.g., on their mobile phone 298. The IoT central module 230 is shown that registers the devices 103 with the IoT app module 240. The registration establishes trust in device connectivity and allows messages to traverse between devices and the cloud in both directions, i.e., device to cloud and cloud to device, according to predefined load scenarios. The monitoring module 280 may monitor telemetry logs 245 generated by the IoT app module 240. The query module 450 generates telemetry metrics data 315 and reports 320 from the telemetry metrics data 315, which may be stored on the metrics storage module 310 and visualized on a performance dashboard 297 over the web interface module 290 to identify errors logged over the past day (as an example) at the IoT app module 240.

According to the embodiments, a machine learning model (MLM) 325 (generally referred to as a neural network model or a generative AI model 324), may be within an AI module 327 or located in one of the identified modules, such as the query module 450 utilized to generate the reports 320. The MLM 325 may be engaged by the user 295, utilizing natural language, when requesting a report, e.g., seeking a solution to a technical operational issue related to operation of the devices 103. In response, the MLM 325 may provide recommendations on remedying issues identified in the telemetry logs 245, e.g., based on accumulated data utilized to train the MLM 325.

As can be appreciated, the MLM 325, may be in a learning mode (training mode), where it is training on datasets, such as obtained from the sensor data 156 or other data identified below. In this mode, the MLM 325 learns patterns and relationships within the data to make accurate predictions or decisions. In this mode, the parameters of the MLM 325 are adjusted based on the input data and the desired output. In a production mode (inference mode), once the MLM 325 is trained and validated, and is deployed, the MLM 325 uses the learned parameters to make predictions on new, unseen data, and provides real-time or batch predictions to end-users or other systems.

Sources of information for the learning mode of the MLM 325 may include data 326, including device maintenance data 326A, e.g., obtained from mechanics engaging apps on their phones 298 that transmit relevant data to the system controller module 220. The data 326 may include code download (e.g., update) data 326B, e.g. obtained from the IoT app module 240. The data 326 may include heartbeat data 326C from the telemetry data 250 including performance, alarms and event data. The data 326 may also include initial commissioning data 326D, e.g., obtained from the IoT central module 230 when registering the device 103.

Similarly, according to the embodiments, the AI module 327, or e.g., the query module 450, may be equipped with a large language model (LLM) 455 as another machine learning model 325 or generative AI model 324. The LLM 455 may be trained using typical techniques, e.g., collecting and processing datasets that are relevant to the operation of the devices 103, applying a model architecture such as transformers which can handle long-range dependencies in text, applying hyperparameter tuning to the training data batches to adjust the size and configuration of the training data, applying optimization techniques to improve accuracy, and thereafter iteratively tuning the LLM 455. The LLM 455 may be trained to respond to technicians 295 who submit queries, e.g., to the system controller module 220, for reports 320 about the current, historical, and predictable (e.g., statistically) future operational conditions of the system 200. That is, while the MLM 325 may be utilized to identify technical operational issues in the system 200 and recommend solutions, the LLM 455 may be utilized to enable a communication exchange with a technician 295 utilizing natural language.

It is to be appreciated that the MLM 325 may be trained to respond to natural language input without the need for a separate LLM 455, e.g., utilizing natural language processing (NLP). NLP is a subfield of machine learning focused on the interaction between computers and human language.

Where the devices 103 are elevator cars, the trained generative AI model 324 may be able to respond to queries such as "how do we fix a door motion issue for elevator car number (xxx) located at (yyyy), where the issue presents as (zzz)." It can be appreciated that, with the disclosed embodiments, technicians 295 can type their queries in the natural language into their phones 298 (or other mobile device), and the system 200 will provide an answer based on amassed data that is processed by the generative AI model 324. The system 200 enables the saving of time and effort, and provides more accurate and reliable solutions to the technicians 295.

As indicated, while various modules are illustrated for performing discrete functions in FIG. 2, it is to be appreciated that two or more of the functions may be combined into a common module or alternatively the functions may be further divided into additional modules. As such reference to the system controller module 220 herein may implicate functions described as applicable to the system controller module 220 or other modules, including one or more dedicated controllers (or processors) 330. Several separate controllers 330A-330C are shown which are dedicated to the AI module 327, the IoT app module 240 and the query module 450 but the system can have a great or fewer number of dedicated processors 330. In addition, or as an alternative, the system controller module 220 may facilitate communications between and operations of the various modules shown in FIG. 2. General reference to controllers 340 herein includes reference to the device controllers 150 and the module controllers 330.

It is to be further appreciated that the utilization of the distributed cloud system is not intended on limiting the scope of the embodiments. That is, the mobile phone 298 of the technician 295 may be configured to perform the processes identified herein as being performed over the distributed system. This would be useful in situations where, for example, the mobile phone 298, in possession of the technician 295, is in a location where it cannot obtain a signal to communicate with the other components of the distributed system 200. Having the mobile phone 298 equipped to perform operations identified as being performed over the distributed system would also avoid latency issues associated with communication exchanges over a network.

The system 200 is configured for providing AI assisted maintenance and control to the people mover 103. The people mover 103 may be an elevator car, a moving platform or an escalator. For example, the system 200, in addition to the people mover 103, may include the device controller 150 operationally coupled to the people mover 103. The device controller 150 is configured to transmit telemetry data 250 over the first communication channel 175A. The system controller module 220 is configured to receive the telemetry data 250. The mobile phone 298 may be configured to transmit mobile device data 299 to the system controller module 220 over the second communication channel 175B.

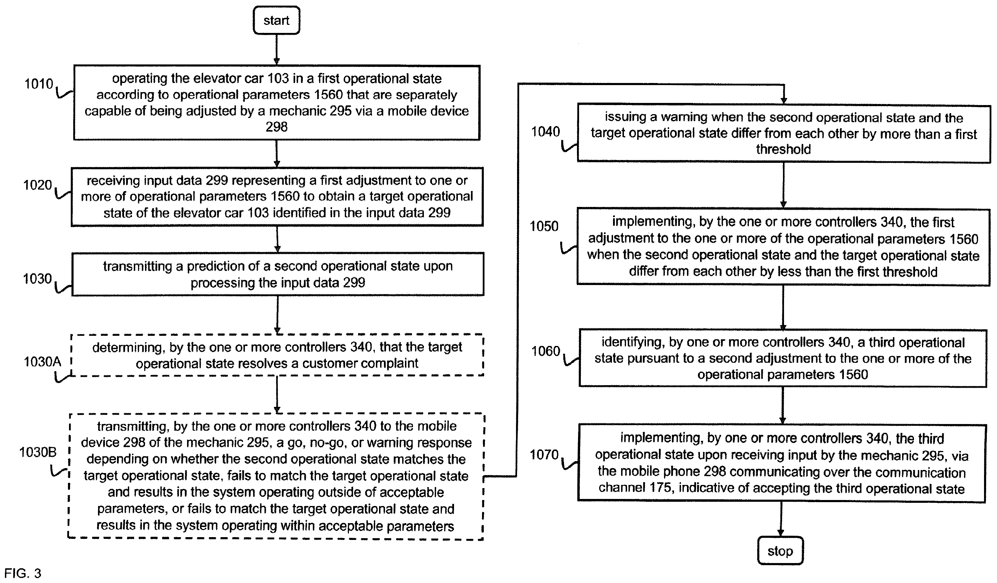

Turning to FIG. 3, a flowchart shows a method of managing a people mover 103 according to one embodiment. The people mover 103 may be an elevator car, a moving platform or an escalator. That is, the discussion of FIG. 3 shall refer to an elevator car 103, but such reference is not intending on limiting the scope of the embodiments. In FIG. 3, boxes in dashed lines in the flowchart represent further explanations, including alternative embodiments, of one or more preceding steps and are not intended to limit the scope of the embodiments.

As shown in block 1010, the method includes operating, by one or more controllers 340, the elevator car 103 in a first operational state according to operational parameters 1560 that are separately capable of being adjusted by a mechanic 295 via a mobile phone 298.

As shown in block 1020, the method includes receiving, by the one or more controllers 340 over a communication channel 175 from the mobile phone 298, input data 299 representing a first adjustment to one or more of operational parameters 1560 to obtain a target operational state of the elevator car 103 identified in the input data 299. For example, the adjustment to the parameters 1560 may relate to the elevator brakes, and the target operational state may be a reduction in travel time between floors of between five and ten seconds. This may be in response to a customer complaint related to travel time between floors.

As shown in block 1030, the method includes transmitting, by the one or more controllers 340 executing an artificial intelligence module 325, over the communication channel 175, to the mobile phone 298 of the mechanic 295, a prediction of a second operational state upon processing the input data 299. For example, the second operational state, determined by the one or more controllers 340 would indicate a reduction in travel time calculated by the one or more controllers 340 based on the first adjustment. As indicated, the AI module 325 may be utilized to perform this analysis based on trained data relating to the effect on the elevator car 103 from changes in the parameters 1560.

In other words, as shown in block 1030A, the method includes determining, by the one or more controllers 340, that the target operational state resolves a customer complaint. As shown in block 1030B, the method includes transmitting, by the one or more controllers 340 to the mobile phone 298 of the mechanic 295 via the communication channel 175, a go, no-go, or warning response depending on whether the second operational state matches the target operational state, fails to match the target operational state and results in the system operating outside of acceptable parameters, or fails to match the target operational state and results in the system operating within acceptable parameters.

As shown in block 1040, the method includes issuing, by the one or more controllers 340 over the communication channel 175, a warning when the second operational state and the target operational state differ from each other by more than a first threshold. For example, if the one or more controllers 340 determines that the reduction in travel time based on the first adjustment is outside of the five to ten second range, either being less than that range or greater than that range, an alert may be issued that the mechanic 295 can view on their phone 298. For example, the reduction may be less than desired, such as one second. Alternatively, the reduction may be greater than desired, which could result in an uncomfortable ride. That is, the one or more controllers 340 executing the AI module 325 may issue a "no-go" or "warning" response to the mechanic. For example, a resulting travel time far outside of the target time reduction and therefore not resolving the customer complaint, or if it determined that a significant system error may occur (i.e., the system operating outside of acceptable operating parameters), may cause the one or more processors 340 to issue a "no-go" recommendation. A resulting travel time just outside of the target time reduction, e.g., by a second, or one which may be outside the target time reduction, therefore not resolving the customer complaint, but not cause a significant system error (i.e., the system operating within acceptable operating parameters), may result in the one or more controllers 340 issuing a "warning" recommendation, i.e., indicating the mechanic may proceed with caution. This enables mechanic to take an informed decision whether to proceed forward with change or not.

As shown in block 1050, the method includes implementing, by the one or more controllers 340, the first adjustment to the one or more of the operational parameters 1560 when the second operational state and the target operational state differ from each other by less than the first threshold. For example, if the travel time between floors for the elevator car 103 falls within the targeted time range, then the controller 340 may implement the first adjustment. The one or more controllers 340 executing the AI module 325 may issue a "go" response, as the customer complaint would be addressed, indicating the mechanic should run the elevator car 103 utilizing the adjusted parameters.

As shown in block 1060, the method includes identifying, by one or more controllers 340, a third operational state pursuant to a second adjustment to the one or more of the operational parameters 1560. The third operational state and the target are predicted to differ from each other by less than the first threshold. For example, if the second operational state differed from the target operational state, then the one or more controllers 340 may determine which of the one or more parameters 1560 to adjust to obtain the target operational state. Such parameters 1560 may include adjusting motion related parameters for the elevator car 103, including acceleration, deceleration, and speed. The one or more controllers 340 executing the AI module 325 may suggest parameter changes that will resolve the complaint raised by the customer.

As shown in block 1070, the method includes implementing, by one or more controllers 340, the third operational state upon receiving input by the mechanic 295, via the mobile phone 298 communicating over the communication channel 175, indicative of accepting the third operational state.

With the above embodiments, a mechanic may visit a site based on a customer complaint. When the mechanic performs is about to deploy a parameter change, an AI engine will analyze the change in the context of customer complaint. The goal of the analysis is to address whether the change will solve customer compliant. When the AI engine finds that proposed parameter changes are not addressing the customer complaint, mechanic will be warned with "no-go" or "warn" responses. If proposed changes do not resolve the customer complaint and can cause a system malfunction, the response is "no-go". If proposed change do not resolve the customer complaint but also do not result in system issues, the response is "warn". When the proposed change resolves the customer complaint, a "go" response is provided. The system enables, with less training and minimal experience, and improved problem solving experience.

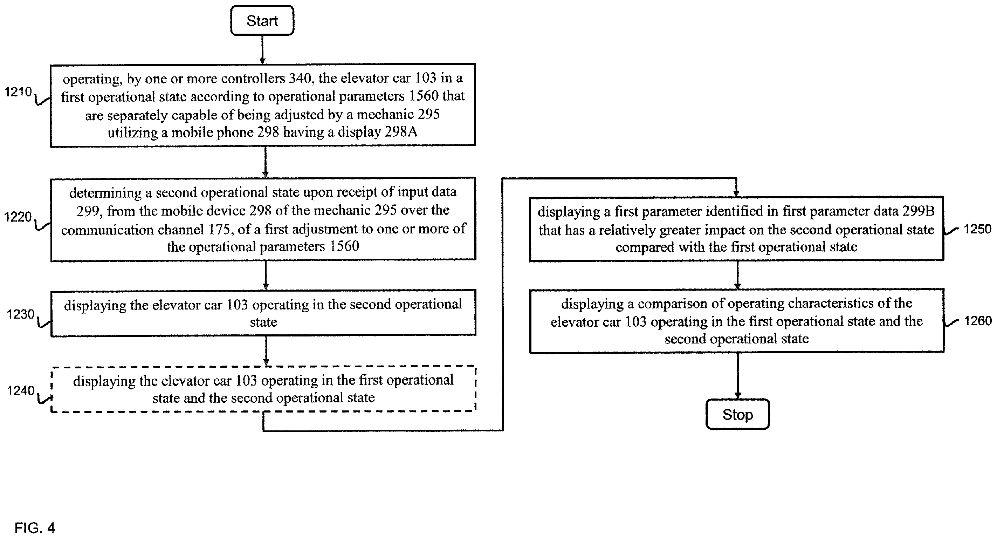

Turning to FIG. 4, a flowchart shows a method of managing a people mover 103 according to another embodiment. The people mover 103 may be an elevator car, a moving platform or an escalator. That is, the discussion of FIG. 4 shall refer to an elevator car 103, but such reference is not intending on limiting the scope of the embodiments. In FIG. 4, boxes in dashed lines in the flowchart represent further explanations, including alternative embodiments, of one or more preceding steps and are not intended to limit the scope of the embodiments.

As shown in block 1210, the method includes operating, by one or more controllers 340, the elevator car 103 in a first operational state according to operational parameters 1560 that are separately capable of being adjusted by a mechanic 295 utilizing a mobile phone 298 having a display 298A.

As shown in block 1220, the method includes determining, by the one or more controllers 340 executing an artificial intelligence module 325, a second operational state upon receipt of input data 299, from the mobile phone 298 of the mechanic 295 over the communication channel 175, of a first adjustment to one or more of the operational parameters 1560. For example, the adjustment to the parameters 1560 may relate to the elevator brakes, and a target operational state may be a reduction in travel time between floors of between five and ten seconds. The second operational state, determined by the one or more controllers 340 executing the AI module 325, would indicate a reduction in travel time based on the first adjustment. As indicated, the AI module 325 may be utilized to perform this analysis based on trained data relating to the effect on the elevator car 103 from changes in the parameters 1560.

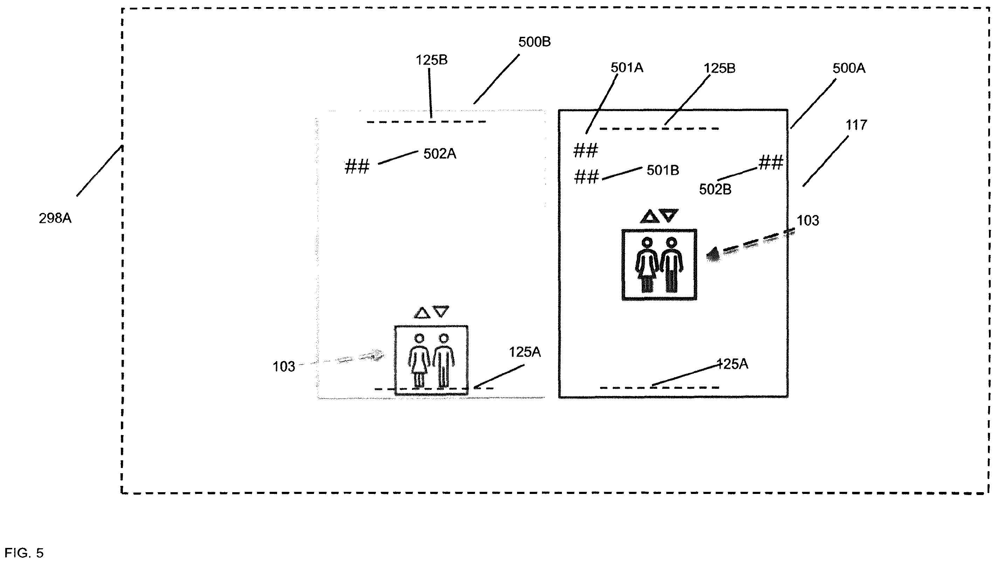

As shown in block 1230, and illustrated in FIG. 5, the method includes illustrating, on the display 298A of the mobile phone 298 of the mechanic 295 from data 299B received by the one or more controllers 340, the elevator car 103 operating in the second operational state. For example, the mobile phone 298 would graphically display on the display 298A an image 500A of elevator car 103 moving in a hoistway 117 between first and second floors 125A, 125B and show a timer 501A to indicate how long the elevator car 103 takes to travel between the floors 125A, 125B. The image 500A would graphically illustrate whether the elevator car 103, operating in second operational state, is meeting the goals of the target operational state. The mechanic 295 may be aware of the time to travel between floors 125A, 125B in the first operational state, which may also be shown on the display as a reference timer 501B. With this information, the mechanic 295 may be able to determine whether the travel time for the elevator car 103 is reduced by the desired amount indicated for the target operational state based on the illustration of the elevator car 103 traveling between floors 125A, 125B.

As shown in block 1240, the method includes illustrating, on the display 298A of the mobile phone 298 of the mechanic 295295 from data 299B received by the one or more controllers 340, the elevator car 103 operating in the first operational state and the second operational state, i.e., in a second image 500B next to the first image 500A. For example, the display 298A may show two elevator cars 103, side by side, in respective hoistways 117, traveling between first and second floors 125A, 125B, where one image 500A shows the car 103 operating according to the first operational state and another image 500B show the car 103 operating according to the second operational state. With this illustration, the mechanic 295 can graphically see whether and by what extent the second operational state is an improvement over the first operational state. Operational states that may address a customer's complaints may include, for example, but are not limited to, a speed at which the elevator car responds to a call, a speed at which the elevator car travels between floors while transporting the customer, a duration at which an elevator car remains at a floor with the doors in an opened or closed state when passengers are or are not entering or exiting the elevator car, a speed at which the doors open or close when passengers are or are not entering or exiting the elevator car, an acceleration of the elevator car from standstill or deceleration from a steady running speed between floors, vibrations associated with elevator movement and door operation, internal ventilation, lighting, speaker volume from an onboard speaker, communication issues with an onboard mic, video clarity of an onboard display, other aspects of the environment within the elevator car, etc.

As shown in block 1250, the method includes illustrating, on the display 298A of the mobile phone 298 of the mechanic 295, a first parameter identified in first parameter data 299B transmitted from the one or more controllers 340 over the communication channel 175. The first parameter data 299B identifies a parameter of the one or more parameters 1560 that has a relatively greater impact on the second operational state compared with the first operational state, as determined by the AI module 325. For example, it may be determined that the parameter controlling acceleration from standstill has a greater impact on reducing travel time between floors than braking. This can help inform the mechanic 295 about which parameters to adjust for obtaining the target operational state.

As shown in block 1260, the method includes illustrating, on the display 298A of the mobile phone 298 of the mechanic 295295 from data 299B received by the one or more controllers 340, a comparison of operating characteristics of the elevator car 103 operating in the first operational state and the second operational state. The comparison may be illustrated as information 502A, 502B on the respective images 500A, 500B of the elevator cars 103 operating in the first and second operational states. The comparison is obtained from comparison data that was received from the one or more controllers 340 executing the AI module 325. The operating characteristics may include one or more of door operations, energy consumption, and waiting time.

With the above embodiment of FIGS. 4 and 5, the AI model 325 is a video generation AI model that is trained on various elevator operational scenarios based on elevator components and standards. When given a set of parameters 1560, the AI model generates realistic simulation of elevator operation. This helps the mechanic 295 assess and view an impact of the parameters 1560 being changed. The mechanic 295 may invoke the model by providing changes being performed. For example, if the mechanic 295 desires to change a parameter value from "X" to "Y", the AI model 325 predicts the impact of the change and summarizes possible impact areas and dependent parameters, e.g., via the graphical illustration. A response from AI model 325 is rendered as a video and displayed on the display 298A of the mobile phone 298 utilized by the mechanic 295. This helps the mechanic 295 perform services in a holistic manner. Further, the AI model 325 also summarizes service instances where a parameter 1560 is changed and shows the impact of the change as it relates to the performance of the elevator car 103. In one embodiment, the AI model 325 can generate video utilizing a preferred language of the mechanic. In one embodiment, the video can be visualized as augmented reality (AR) object, e.g., using . An AR projection may assist the mechanic 295 in displaying performance updates to peers, including customers.

Further, the mechanic 295 may customize the video being generated, for example, by displaying a side-by-side visualization of the current (first operational) state and the future (second operational) state with parameter changes, as shown in FIG. 5. Different views included in video may be of door operations, drive energy consumption, passenger waiting, etc. The video may be updated based on building configuration, product model etc. It is to be appreciated that the number of adjustable parameters may differ depending on the type of people mover utilized. For example, the number of adjustable parameters may differ for an elevator system as compared with an escalator system. However, the claimed embodiment are nonetheless appliable to all forms of controlled people movers.

Regarding the implementation of artificial intelligence (AI) identified herein, expressly or inherently, a machine learning model, e.g., part of an artificial intelligence (AI) system, may be utilized in the embodiments. An AI system simulates human intelligence using a digital computer or a machine controlled by a digital computer, senses the environment, e.g., using available sensors including speed, acceleration, vibration, sound, video and the like, and acquires knowledge and uses the knowledge to obtain the optimum results. The AI infrastructure includes technologies such as the sensors, dedicated artificial intelligence chips, cloud computing, distributed storage, big data processing technologies, operation/interaction systems, mechatronics, and the like. Some implementations of AI according to the embodiments utilize computer vision technology, a voice processing technology, a natural language processing technology, machine learning/deep learning and the like.

Some implementations of AI according to the embodiments utilize pre-trained (PT) machine translation models that adopt a sequence-to-sequence (sequence-sequence or S-S) framework based on a neural network. The S-S framework is a framework including an encoder-decoder structure. The encode-decoder structure converts an input sequence into another sequence output. In this framework, the encoder converts the input sequence into vectors, and the decoder accepts the vectors and generates the output sequence in time order. The encoder and the decoder may utilize the same type of neural network (NN) model, or may utilize different types of neural network models. The neural network model may be a CNN (Convolutional Neural network) model, an RNN (redundant Neural network) model, a long-short-term memory (LSTM) model, a delay network model, a gated CNN model, or the like.

The trained machine learning models, once trained, can analyze the input data, and in one or more aspects, predict and/or characterize features included in the sensed data. In the case of video, in one non-limiting example, the sensed data can include sequential images and/or encoded video data (e.g., using digital video file/stream formats and/or codecs, such as MP4, MOV, AVI, WEBM, AVCHD, OGG, and/or the like including combinations and/or multiples thereof). The prediction and/or characterization of the features can include segmenting the video data. In some instances, the one or more trained machine learning models include or are associated with a preprocessing or augmentation (e.g., intensity normalization, resizing, cropping, and/or the like including combinations and/or multiples thereof) that is performed prior to segmenting the video data. An output of the one or more trained machine learning models can include a prediction of aspects of the video data, a location and/or position of the aspects within the video data, and/or state of the aspects. The location can be a set of coordinates in an image/frame in the video data. The trained machine learning models, in one or more examples, are trained to perform higher-level predictions and tracking.

Similar predictions can be made with regard to the operational state of a device by analyzing sensor data captured while the device is utilized and applying the data to trained machine learning models. For example, utilizing a serviced learning technique, the model is trained on known inputs and outputs from legacy events to predict future outputs from future inputs. The models may be evaluated so that variables may be weighted or re-weighted to more accurately correlate inputs and outputs, and the model may be re-retrained as more inputs and outputs are collected. For example, the prediction of a state of multiple devices of an operationally integrated system of devices may be obtained utilizing a trained model. Data may be captured, including operational sounds, vibrations, etc., for one (or fewer than all) of the devices, and the captured data may be run through a trained model that is trained to identify the influence (constructive and destructive) that the devices have on each other in their respective operational states, including when they are functioning within and outside of acceptable tolerances.

Regarding telecommunication implementations identified herein, expressly or inherently, wireless connections identified above may apply protocols that include local area network (LAN, or WLAN for wireless LAN) protocols and/or a private area network (PAN) protocols. LAN protocols include WiFi technology, based on the Section 802.11 standards from the Institute of Electrical and Electronics Engineers (IEEE). PAN protocols include, for example, Bluetooth Low Energy (BTLE), which is a wireless technology standard designed and marketed by the Bluetooth Special Interest Group (SIG) for exchanging data over short distances using short-wavelength radio waves. PAN protocols also include Zigbee, a technology based on Section 802.15.4 protocols from the IEEE, representing a suite of high-level communication protocols used to create personal area networks with small, low-power digital radios for low-power low-bandwidth needs. Such protocols also include Z-Wave, which is a wireless communications protocol supported by the Z-Wave Alliance that uses a mesh network, applying low-energy radio waves to communicate between devices such as appliances, allowing for wireless control of the same.

Other applicable protocols include Low Power WAN (LPWAN), which is a wireless wide area network (WAN) designed to allow long-range communications at a low bit rates, to enable end devices to operate for extended periods of time (years) using battery power. Long Range WAN (LoRaWAN) is one type of LPWAN maintained by the LoRa Alliance, and is a media access control (MAC) layer protocol for transferring management and application messages between a network server and application server, respectively. Such wireless connections may also include radio-frequency identification (RFID) technology, used for communicating with an integrated chip (IC), e.g., on an RFID smartcard. In addition, Sub-1Ghz RF equipment operates in the ISM (industrial, scientific and medical) spectrum bands below Sub 1Ghz - typically in the 769 - 935 MHz, 315 Mhz and the 468 Mhz frequency range. This spectrum band below 1Ghz is particularly useful for RF IOT (internet of things) applications. Other LPWAN-IOT technologies include narrowband internet of things (NB-IOT) and Category M1 internet of things (Cat M1-IOT). Wireless communications for the disclosed systems may include cellular, e.g. 2G/3G/4G (etc.). The above is not intended on limiting the scope of applicable wireless technologies.

Wired connections identified above may include connections (cables/interfaces) under RS (recommended standard)-422, also known as the TIA/EIA-422, which is a technical standard supported by the Telecommunications Industry Association (TIA) and which originated by the Electronic Industries Alliance (EIA) that specifies electrical characteristics of a digital signaling circuit. Wired connections may also include (cables/interfaces) under the RS-232 standard for serial communication transmission of data, which formally defines signals connecting between a DTE (data terminal equipment) such as a computer terminal, and a DCE (data circuit-terminating equipment or data communication equipment), such as a modem. Wired connections may also include connections (cables/interfaces) under the Modbus serial communications protocol, managed by the Modbus Organization. Modbus is a sever/client protocol designed for use with its programmable logic controllers (PLCs) and which is a commonly available means of connecting industrial electronic devices. Wireless connections may also include connectors (cables/interfaces) under the PROFibus (Process Field Bus) standard managed by PROFIBUS & PROFINET International (PI). PROFibus which is a standard for fieldbus communication in automation technology, openly published as part of IEC (International Electrotechnical Commission) 61158. Wired communications may also be over a Controller Area Network (CAN) bus. A CAN is a vehicle bus standard that allows microcontrollers and devices to communicate with each other in applications without a host computer. CAN is a message-based protocol released by the International Organization for Standards (ISO). The above is not intended on limiting the scope of applicable wired technologies.

As indicated, when data is transmitted over a network between end processors, the data may be transmitted in raw form or may be processed in whole or part at any one of the end processors or an intermediate processor, e.g., at a cloud service or other processor. The data may be parsed at any one of the processors, partially or completely processed or compiled, and may then be stitched together or maintained as separate packets of information.

Regarding computing technologies identified herein, expressly or inherently, each processor identified herein may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory identified herein may be but is not limited to a random access memory (RAM), read only memory (ROM), or other electronic, optical, magnetic or any other computer readable medium. Embodiments can be in the form of processor-implemented processes and devices for practicing those processes, such as processor. Embodiments can also be in the form of computer code based modules, e.g., computer program code (e.g., computer program product) containing instructions embodied in tangible media (e.g., non-transitory computer readable medium), such as floppy diskettes, CD ROMs, hard drives, on processor registers as firmware, or any other non-transitory computer readable medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an device for practicing the exemplary embodiments. When implemented on a general-purpose microprocessor, the computer program code segments configure the microprocessor to create specific logic circuits.

The terminology used herein is for the purpose of describing particular embodiments only and is not intended to be limiting of the present disclosure. The term "about" is intended to include the degree of error associated with measurement of the particular quantity and/or manufacturing tolerances based upon the equipment available at the time of filing the application. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. A people mover system comprising:
a people mover;
one or more controllers, executing an artificial intelligence module, configured to:
operate the people mover in a first operational state according to operational parameters that are separately capable of being adjusted by a mechanic via a mobile device; and
transmit, to the mobile device of the mechanic a prediction of a second operational state following receipt of input data from the mobile device of the mechanic of a first adjustment to the one or more of the operational parameters, wherein the input data is indicative of a target operational state of the people mover identified in the input data.

2. The people mover system of claim 1,
wherein the one or more controllers is configured to:
determine that the target operational state resolves a customer complaint; and
transmit a go, no-go, or warning response to the mobile device of the mechanic depending on whether the second operational state matches the target operational state, fails to match the target operational state and results in the system operating outside of acceptable parameters, or fails to match the target operational state and results in the system operating within acceptable parameters.

3. The people mover system of claim 1 or 2,
wherein the one or more controllers configured to issue a warning when the second operational state and the target operational state differ from each other by more than a first threshold; and/or
wherein the one or more controllers is configured to implement the first adjustment to the one or more of the operational parameters when the second operational state and the target operational state differ from each other by less than the first threshold.

4. The people mover system of any of claims 1 to 3,
wherein the one or more controllers is configured to identify a third operational state, pursuant to a second adjustment to the one or more of the operational parameters; and
the third operational state and the target operational state are predicted to differ from each other by less than the first threshold; and/or
wherein the one or more controllers configured to implement the third operational state upon receiving input by the mechanic indicative of accepting the third operational state.

5. A method of controlling a people mover system comprising:
operating, by one or more controller executing an artificial intelligence module, a people mover in a first operational state according to operational parameters that are separately capable of being adjusted by a mechanic via a mobile device;
receiving, by the one or more controllers, input data indicative of a first adjustment to one or more of the operational parameters to obtain a target operational state of the people mover; and
transmitting, by the one or more controllers to the mobile device of the mechanic, a determination of a second operational state upon processing the input data.

6. The method of claim 7, including the one or more controllers:
determining that the target operational state resolves a customer complaint; and
transmitting a go, no-go, or warning response to the mobile device of the mechanic depending on whether the second operational state matches the target operational state, fails to match the target operational state and results in the system operating outside of acceptable parameters, or fails to match the target operational state and results in the system operating within acceptable parameters.

7. The method of claim 5 or 6, comprising:
issuing, by the one or more controllers, a warning when the second operational state and the target operational state differ from each other by more than a first threshold.

8. The method of any of claims 5 to 7, comprising:
implementing, by the one or more controllers, the first adjustment to the one or more of the operational parameters when the second operational state and the target operational state differ from each other by less than the first threshold.

9. The method of any of claims 5 to 8, comprising:
identifying, by the one or more controllers, a third operational state, pursuant to a second adjustment to the one or more of the operational parameters;
wherein the third operational state and the target operational state are predicted to differ from each other by less than the first threshold; and/or
the method comprising:
implementing, by the one or more controllers, the third operational state upon receiving input by the mobile device of the mechanic indicative of accepting the third operational state.

10. The method of any of claims 1 to 9, including:
displaying by the mobile device utilized of the mechanic the people mover operating in the second operational state.

11. The method of claim 10, including:
displaying by the mobile device of the mechanic from data received by the one or more controllers the people mover operating in the first operational state and the second operational state.

12. The method of claim 10 or 11, including:
illustrating, by the mobile device, on the display of the mobile device from the data received by the one or more controllers, a first parameter identified in first parameter data transmitted from the one or more controllers, wherein the first parameter has a relatively greater impact on the second operational state compared with the first operational state; and/or
the method including:
illustrating, on the display of the mobile device from the data received by the one or more controllers, a comparison of operating characteristics of the people mover operating in the first operational state and the second operational state, received as comparison data from the one or more controllers, wherein the operating characteristics include one or more of door operation, energy consumption, and waiting time.

13. A method of operating a people mover system, comprising:
operating, by one or more controllers executing an artificial intelligence module, a people mover in a first operational state according to operational parameters that are separately capable of being adjusted by a mechanic utilizing a mobile device having a display;
predicting, by the one or more controllers, a second operational state upon receipt of input data from the mobile device of the mechanic indicative of a first adjustment to one or more of the operational parameters to obtain a target operational state of the people mover;
transmitting, by the one or more controllers to the mobile device of the mechanic, a prediction of the second operational state to the mobile device; and
illustrating, on the display of the mobile device from data received by the one or more controllers, the people mover operating in the second operational state after processing the input data.

14. The method of claim 13, comprising:
illustrating, on the display of the mobile device from the data received by the one or more controllers, the people mover operating in the first operational state and the second operational state.

15. The method of claim 13 or 14, comprising:
illustrating, on the display of the mobile device, a first parameter identified in first parameter data transmitted from the one or more controllers, wherein the first parameter has a relatively greater impact on the second operational state compared with the first operational state; and/or
the method comprising:
illustrating, on the display of the mobile device from the data received by the one or more controllers, a comparison of operating characteristics of the people mover operating in the first operational state and the second operational state, received as comparison data from the one or more controllers, wherein the operating characteristics include one or more of door operation, energy consumption, and waiting time.
